# EUROPÄISCHE PATENTSCHRIFT

(11) **EP 2 061 988 B1**
(45) Veröffentlichungstag und Bekanntmachung des Hinweises auf die Patenterteilung: **18.11.2009**
(21) Anmeldenummer: 07785962.7
(22) Anmeldetag: 16.07.2007
(51) Int. Cl.: F17C 1/06

(54) **DRUCKBEHÄLTER**
PRESSURE VESSEL
RÉSERVOIR SOUS PRESSION

(30) Priorität: 16.09.2006 DE 102006043582
(43) Veröffentlichungstag der Anmeldung: 27.05.2009
(73) Patentinhaber: Xperion GmbH, 32052 Herford (DE)
(72) Erfinder: MÜLLER, Dietmar, 32052 Herford (DE)
(74) Vertreter: Bittner, Thomas L.
(86) Internationale Anmeldenummer: PCT/EP2007/006096
(87) Internationale Veröffentlichungsnummer: WO 2008/031471

(56) Entgegenhaltungen:
- DE-A1- 3 049 015
- DE-A1- 10 325 598
- DE-A1- 10 345 159
- FR-A- 2 866 097
- US-A- 3 163 183

## Beschreibung

### Technisches Gebiet

Die Erfindung betrifft einen Druckbehälter nach dem Oberbegriff von Anspruch 1. Derartige Druckbehälter gelangen bei der Speicherung von druckbelasteten gasförmigen oder flüssigen Medien zur Anwendung.

Ein derartiger Behälter ist aus der US-A-3 163 183 bekannt.

### Stand der Technik

Ein solcher Druckbehälter ist aus der DE 197 51 411 C1 bekannt. Er enthält einen blasgeformten Kunststoffliner ohne nennenswerte Festigkeit, der von einer Armierung aus in Kunstharz eingebetteten Fasern außenseitig umschlossen ist. Als Fasern werden Kohlenstoff-, Aramid-, Glas- und Borfasern sowie AI2O3-Fasern und Gemische daraus erwähnt. Die einzelnen Faserarten haben voneinander abweichende Eigenschaften und auch eine unterschiedliche Bruchdehnung. Sie sind nach Art von Wicklungen auf den Kunststoffliner aufgebracht und in eine Kunststoffmatrix eingebetet, die aus Epoxid- oder Phenolharz bzw. aus Thermoplasten wie z.B. Polyamid, Polyäthylen oder Polypropylen. Allen Ausbildungen ist gemein, dass die so erhaltene Armierung eine Festigkeit hat, die ausreicht, um den Kräften standzuhalten, die aus einer Druckbelastung des enthaltenen Gases oder der Flüssigkeit resultieren. Die Bruchdehnung ergibt sich vor allem aus den Eigenschaften und der Anordnung der jeweils enthaltenen Fasern. Eine Überlastung kann zum Bersten des Druckbehälters führen, was mit erheblichen Risiken verbunden sein kann, die darin bestehen, dass die Druckbehälter bei einer Überlastung plötzlich, unvorhersehbar, das heißt unvorhersehbar unkontrollierbar bersten. Aufgrund dieses Versagensverhaltens ist es üblich, die bekannten Druckbehälter mit einer Faserverbundarmierung mit verhältnismäßig hohen Sicherheitsfaktoren zu belegen. Die Behälter mit einer Armierung aus Faserverbundstoff sind daher erheblich überdimensioniert. Es werden neben der Verwendung von Druckbehältern mit einer Armierung von teuren, hochfesten Kohlenstofffasern auch kostengünstige Glasfasern eingesetzt. Die Dauerfestigkeit der Glasfasern ist wenig befriedigend. Daher sind hier die Sicherheitsfaktoren besonders hoch.

### Darstellung der Erfindung

Der Erfindung liegt die Aufgabe zu Grunde, einen solchen Druckbehälter derart herzustellen, dass bei verbesserter Dauerhaltbarkeit und sparsamerem Materialeinsatz eine Überlastung frühzeitig angezeigt wird und ein unvorhersehbares Bersten ausgeschlossen ist.

Diese Aufgabe wird erfindungsgemäß bei einem Druckbehälter nach dem Oberbegriff durch die kennzeichnenden Merkmale von Anspruch 1 gelöst. Auf vorteilhafte Weiterbildungen nehmen die Unteransprüche Bezug.

Erfindungsgemäß ist somit zusätzlich zur ersten Armierung eine zweite Armierung vorgesehen, wobei die zweite Armierung eine Bruchdehnung hat, die kleiner ist als diejenige der ersten Armierung, dass die erste Armierung, für sich allein genommen, ausreicht, um die aus dem Druck des Mediums in dem Druckbehälter resultierenden Kräfte insgesamt aufzunehmen, dass es bei einer Überlastung zu einem Bruch der zweiten Armierung kommt und dass der Bruch der zweiten Armierung erkennbar angezeigt wird, ohne dass es zu einer Funktionsbeeinträchtigung der ersten Armierung (22) kommt.

Die zweite Armierung ist bei normalem Betriebsdruck parallel zur ersten Armierung wirksam, was die erste Armierung entlastet und eine verbesserte Dauerhaltbarkeit der ersten Armierung bei zugleich geringerem Gewicht bedingt. Die Dehnung steigt parallel zur Höhe des Druckes des eingespeisten Mediums allmählich an. Eine Überlastung des Druckbehälters führt wegen der geringeren Bruchdehnung der zweiten Armierung, verglichen mit derjenigen der ersten Armierung, zunächst nur zu einem Bruch der zweiten Armierung. Die Gesamtlast geht dann auf die erste Armierung über, die hinreichend fest ist, um diese allein aufzunehmen. Ein solcher Bruch ist immer mit einer sprunghaften Dehnung und einer erkennbaren Veränderung des Aussehens des Druckbehälters verbunden, die durch verschiedene Mittel angezeigt werden können.

Ein Bruch der zweiten Armierung ist unschwer visuell zu erkennen. Die Mittel können insofern durch die zweite Armierung selbst gebildet werden. Um einen gegebenenfalls sehr feinen Bruch besser erkennbar zu machen, kann es vorgesehen sein, den Druckbehälter, bezogen auf die Farbe der zweiten Armierung, mit einem kontrastfarbenen Kontrollanstrich zu versehen.

Ein Bruch kann auch von dem elektrisch, mechanisch oder optisch wirksamen Signalgeber leicht und zuverlässig erfasst werden.

Erfindungsgemäß wird dies genutzt, um die sich anbahnende Gefahr eines des Berstens des Druckbehälters rechtzeitig vor dem Eintreten eines solchen Ereignisses abzuwenden, z.B. indem der Druckbehälter elektrisch oder mechanisch abgeschaltet und/oder entleert wird. Es ist daher mit dem Auftreten eines Bruchs in der zweiten Armierung kein Risiko verbunden. Ein unkontrolliertes Austreten von Bestandteilen des eingeschlossenen Mediums, bei dem es sich normaler Weise um ein druckbeaufschlagtes Gas oder eine Flüssigkeit handelt, ist daher nicht zu befürchten.

Das bei einem Bruch der zweiten Armierung erhaltene Signal wird somit im Rahmen der Erfindung als Indikator verwendet, um den Druckbehälter für die weitere Verwendung zu sperren oder das enthaltene Medium gezielt, d.h. kontrolliert, entweichen zu lassen. Der Druckbehälter muss dann aus dem Betrieb genommen und durch einen neuen Druckbehälter ersetzt werden. Im Hinblick auf die z.B. in der Wasserstoffspeicherung verwendeten Speicherdrücke von bis zu 700 bar ist die rechtzeitige Anzeige einer Überlastung ein wichtiger Sicherheitsaspekt. Dem Betreiber wird ein "Fail-Safe-Verhalten" zur Verfügung gestellt. Das heißt: Trotz eines lokalen, kontrollierten und indizierbaren Versagens bleibt das System insgesamt funktionstüchtig und sicher. Nach dem Versagen der zweiten Armierung ist eine weitere Drucksteigerung bis zum endgültigen Berstdruck theoretisch möglich, aber systematisch ausgeschlossen, wenn elektrische, mechanische oder optische Abschaltmechanismen in die Funktion des Druckbehälters mit einbezogen sind. Solche automatischen Abschaltmechanismen können insbesondere eine vollautomatische Entleerung oder Sperrung des Druckbehälters bewirken.

Die zweite Armierung hat zweckmäßig eine Bruchdehnung, die maximal 90 % der Bruchdehnung der ersten Armierung erreicht, bevorzugt 50 bis 70 % der Bruchdehnung der ersten Armierung. Hierdurch ist sichergestellt, dass die zweite Armierung deutlich früher als die erste Armierung versagt und dass es beim Versagen der zweiten Armierung nicht zu einer Schädigung der ersten Armierung kommt. Die unterschiedlichen Bruchdehnungen der Armierungen werden bevorzugt durch eine gezielte Materialauswahl in Bezug auf einander gesteuert, insbesondere dadurch, dass die gegebenenfalls in der ersten Armierung enthaltenen Fasern eine größere Bruchdehnung haben als diejenigen in der zweiten Armierung.

Die geforderten, unterschiedlichen Bruchdehnungen der Armierungen können auch konstruktiv erzielt werden, z.B. dadurch, dass die erste und die zweite Armierung dieselben Fasern enthalten und dass die in einem zylindrischen Bereich des Druckbehälters angeordneten Fasern der ersten Armierung mit der Achse des Druckbehälters einen Winkel einschließen, der wenigstens 20°, vorteilhaft wenigstens 30°, kleiner ist als derjenige der Fasern in der zweiten Armierung in dem zylindrischen Bereich. Durch diese Maßnahme ist die Bruchdehnung der zweiten Armierung ebenfalls geringer als diejenige der ersten Armierung. Bei einer zunehmenden Vergrößerung der Winkeldifferenz der Fasern in den beiden Armierungen ergibt sich eine zunehmende Verminderung der Bruchdehnung der zweiten Armierung. Die Fasern sind im Allgemeinen in den Armierungen in einander überkreuzenden Lagen angeordnet und durch die Kunststoffmatrix miteinander verklebt.

Bevorzugt hat die zweite Armierung eine höhere Steifigkeit als die erste Armierung. Dies hat den Vorteil, dass die erste Armierung im Betrieb stark entlastet wird, was die Dauerhaltbarkeit des Druckbehälters verbessert. Die Steifigkeit der zweiten Armierung sollte mindestens 10 % und zweckmäßig mindestens 50 % höher sein, damit es zu einer deutlichen Entlastung der ersten Armierung kommt. Bevorzugt ist die Steifigkeit der zweiten Armierung um ein Vielfaches höher als diejenige der ersten Armierung.

Nach einer vorteilhaften Ausgestaltung ist es vorgesehen, dass die erste Armierung aus Metall besteht und beispielsweise die Gestalt eines tiefgezogenen und/oder verschweißten Druckkessels aus Stahl oder einem anderen Metall hat. Derartige Werkstoffe haben eine verhältnismäßig kleine Bruchdehnung. Sie befinden sich, für sich allein genommen, in vielfältiger Anwendung und lassen sich durch handelsübliche Verschraubungen besonders leicht montieren. Die zweite Armierung lässt sich problemlos darauf aufbringen, beispielsweise im Zuge eines Wickelprozesses mit vorgespannten, kunstharzgetränkten Fasersträngen unter nachfolgender Aushärtung des Kunstharzes. Es ist somit bei dieser Bauform nicht erforderlich, einen Kunststoffliner im Inneren zu verwenden.

Als vorteilhaft erweist es sich, wenn beide Armierungen Fasern enthalten, die als Wicklung aufgebracht und vorgespannt in das Kunstharz eingebettet sind. Ein solcher, homogen aufgebauter Druckbehälter ist von besonders geringem Gewicht und inert gegen vielerlei Belastungen.

Die beiden Armierungen können schichtweise übereinander liegend angeordnet sein, wobei die Anzahl der Schichten beliebig ist. Auch können die Schichten ineinanderüberbegehend oder vermischt ausgebildet sein. Eine Kontrolle der jeweiligen Bruchdehnungen der einzelnen Armierungen wird dann allerdings verhältnismäßig schwieriger. Die Ausbildung ist daher Sonderfällen vorbehalten.

Bevorzugt gelangt eine Ausbildung zur Anwendung, bei der die zweite Armierung die erste Armierung außenseitig umschließt. Ein Bruch der zweiten Armierung ist bei einer solchen Ausbildung besonders leicht erkennbar und als Indikator zu verwenden.

Nach einer anderen vorteilhaften Ausgestaltung ist es vorgesehen, dass die erste Armierung die zweite Armierung außenseitig umschließt. Diese Ausbildung hat den Vorteil, dass die verhältnismäßig spröde, zweite Armierung durch die nachgiebigere, erste Armierung vor eventuellen, mechanischen Beschädigungen zusätzlich geschützt wird.

Die zweite Armierung hat zweckmäßig eine Wandstärke, die 5 - 50 % derjenigen der ersten Armierung beträgt. In diesem Bereich wird neben einer guten Verbesserung der Dauerhaltbarkeit des Druckbehälters eine gute Anzeige von Überlastungen erhalten.

Die die Armierungen bildenden Fasern können aus dem Spektrum der bekannten Fasern ausgewählt werden, wobei es maßgeblich auf die gegenseitige Abstimmung der Bruchdehnungen der ersten und der zweiten Armierung im Sinne des Patentbegehrens ankommt. Als zweckmäßig hat es sich erwiesen, wenn Metall-, Kohlenstoff-, Glas-, Aramid-, Pech-, Polyester und /oder Basaltfasern zur Anwendung gelangen.

Ein Störfall lässt sich besonders einfach und sicher erkennen, wenn die zweite Armierung eine Sollbruchstelle aufweist. Sie wird folglich bei eintretender Überlastung genau an dieser Stelle brechen und nicht in einem u.U. nur sehr schwer zu überwachenden Bereich. Der zur Anwendung gelangende Signalgeber braucht folglich nur dieser einen Stelle zugeordnet zu werden. Er lässt sich demgemäss sehr klein und leicht gestalten.

Als vorteilhaft hat es sich erwiesen, wenn der Signalgeber zur Abgabe eines elektrischen oder mechanischen Steuersignals geeignet ist. Dieses kann beispielsweise dazu verwendet werden, einen Störfall anzuzeigen oder dazu, das druckbeaufschlagte Medium in einen anderen Druckbehälter umzuleiten und/oder den Druckbehälter abzuschalten oder das Medium gezielt aus dem Druckbehälter entweichen zu lassen.

### Kurzbeschreibung der Zeichnung

Eine beispielhafte Ausführung der Erfindung ist in der beiliegenden Zeichnung dargestellt. Sie wird nachfolgend näher erläutert.

Es zeigen:
Fig. 1 einen Druckbehälter schematisch wiedergegebenen Druckbehälter in längsgeschnittener Darstellung.
Fig. 2 ein Diagramm, in dem die sich während der bestimmungsgemäßen Verwendung des Druckbehälters nach Fig. 1 auftretenden Dehnungen bei den verschiedenen Druckstufen wiedergegeben sind.

### Ausführung der Erfindung:

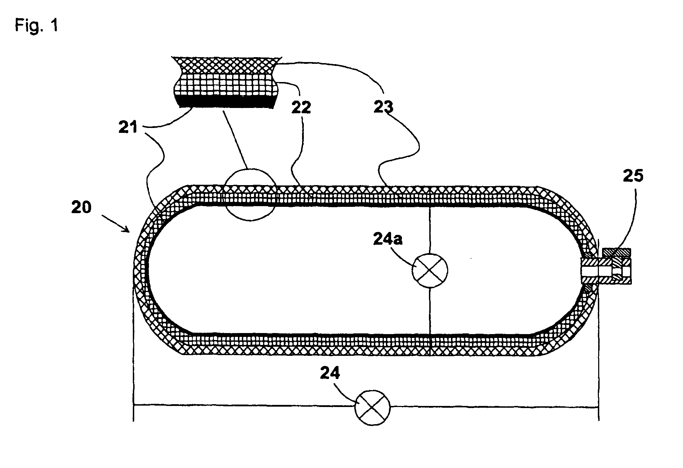

Fig. 1 zeigt einen Druckbehälter 20 für ein druckbelastetes, fließfähiges Medium, umfassend einen innenseitig angeordneten Liner 21 in Gestalt eines Blas- oder Rotationsformhohlkörpers aus Kunststoff, hier aus einem thermoplastischen Werkstoff, der von einer ersten Armierung 22 außenseitig umschlossen ist und diese von einer schichtweise darüber liegenden, zweiten Armierung 23. Ferner sind Anschlussteile 25 für die Einspeisung eines druckbeauschlagbaren Mediums vorgesehen, die dem Stand der Technik entsprechen können.

Die erste Armierung 22 besteht aus Glasfasern, die als Wicklung aufgebracht und in Kunstharz eingebettet sind. Die Fasern werden in Gestalt von kunstharzgetränkten, mechanisch vorgespannten Fasersträngen auf den Liner 21 aufgewickelt, wobei die Anzahl der Wicklungen und die Art und Dicke der Fasern sowie die Auswahl und Aushärtung des Kunstharzes bekannten Vorbildern entsprechen können, grundsätzlich aber von den im Einzelfall gegebenen Anforderungen abhängt. Die Dicke der ersten Armierung 22 kann im Vergleich zu den einschichtigen Bauformen nach den Stand der Technik erheblich reduziert sein, weil es nicht mehr erforderlich, die bisherigen, erheblichen Sicherheitsreserven einzubauen. Statt dieser Reserven, die zu einer erheblichen Gewichtszunahme führen, kommt die zweite Armierung zur Anwendung, die die erste Armierung teilweise entlastet und im Falle einer Überlastung maßgeblich eine Indikatorfunktion hat und demgemäss erheblich leichter ausfällt.

Zusätzlich zur ersten Armierung 22 ist eine zweite Armierung 23 vorgesehen, die ähnlich wie die erste Armierung 22 aufgebaut und aufgebracht ist. Ihre radiale Dicke beträgt ca. 10% der Dicke der ersten Armierung 22. Nur die erste Armierung 22 hat eine Tragfähigkeit, die ausreichend ist, den Kräften allein standzuhalten, die aus dem in dem Druckbehälter 20 eingeschlossen Medium resultieren.

Außerdem unterscheidet sich die zweite Armierung 23 von der ersten Armierung dadurch, dass sie eine Bruchdehnung hat, die kleiner ist als diejenige der ersten Armierung 22. Bei einer Überlastung des Druckbehälters mit stetiger Druckzunahme wird die erste Armierung 22 daher immer zeitverschoben später brechen als die zweite Armierung 23. Sie kann auch aus Metall bestehen, beispielsweise aus tiefgezogenem Stahl. Bevorzugt gelangen In der ersten Armierung Glas- oder Basaltfasern zur Anwendung und in der zweiten Armierung Kohlenstofffasern. Die Steifigkeit der Kohlenstofffasern der zweiten Armierung 23 ist um den Faktor drei größer als diejenige der Glasfasern der ersten Armierung 22. Es kommt dadurch in diesem Beispiel zu einer deutlichen Entlastung der ersten Armierung 22.

Ferner ist der Druckbehälter 20 mit einem Signalgeber 24 versehen, der zumindest geeignet ist, einen Bruch der zweiten Armierung 23 anzuzeigen. Er besteht in dem Ausführungsbeispiel nach Fig. 1 aus einem Zugsensor 24, der die einander gegenüberliegenden Enden des Druckbehälters 20 miteinander verbindet. Er kann auch in Umfangsrichtung angeordnet sein, Bezugsziffer 24a und spricht auf ein Bruch nur der zweiten Armierung an, d.h. auf die dann zu erwartende, kontrollierte und sprunghafte Dehnungsänderung.

Bei dem Druckbehälter 20 nach Fig. 1 bestehen beide Armierungen 22,23 aus Fasern, die schichtweise übereinanderliegend als Wicklung aufgebracht und in Kunstharz eingebettet und eingebunden sind.

Die zweite Armierung kann eine in der Darstellung nicht gezeigte Sollbruchstelle aufweisen, um den Bereich, in dem bei einer Überlastung ein Bruch auftritt, räumlich einzugrenzen. Die Sollbruchstelle kann durch eine Einkerbung gebildet der zweiten Armierung 22 gebildet sein.

Das im Falle eines Bruches der zweiten Armierung abgegebene Signal kann ein elektrisches, optisches oder mechanisches Steuersignal sein, welches zur Abschaltung des Druckbehälters 20 geeignet ist bzw. dazu, das eingeschlossene Medium kontrolliert aus dem Druckbehälter entweichen zu lassen.

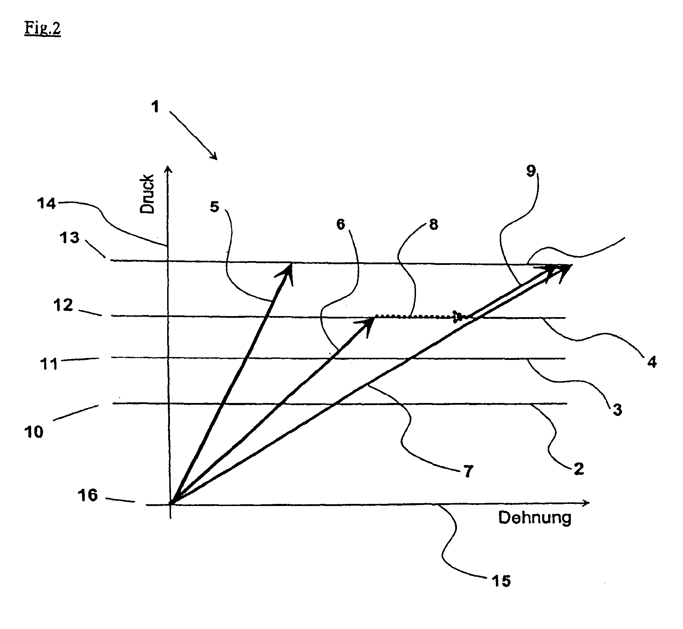

Die Funktion der Erfindung wird durch das Diagramm in Fig. 2 weiter verdeutlicht. Darin ist der Druck über der Dehnung aufgetragen. Die Druckskala 14 kennzeichnet den im Druckbehälter 20 vorhandenen Druck des flüssigen oder gasförmigen Mediums. Die Dehnungsskala 15 kennzeichnet die aus dem im Druckbehälter vorhandenen Druck resultierenden Dehnung der den Druckbehälter 20 umgebenden Armierungen 22 und 23. Auf der Druckskala 14 sind Druckstufen angegeben. Druckstufe 16 bezeichnet den drucklosen Anwendungsfall, Druckstufe 10 den Betriebsdruck (z.B. 200bar) und Druckstufe 13 den Berstdruck (z.B. 500 bar).

Die Kurve 5 in dem Diagramm verdeutlicht den Dehnungsverlauf bei kontinuierlicher Druckzunahme in einem Druckbehälter, der ausschließlich aus der zweiten Armierung 23 besteht, die hier ausschließlich Kohlenstofffasern enthält, die Kurve 7 den Dehnungsverlauf eines Druckbehälters, der ausschließlich aus der ersten Armierung 22 besteht, die hier ausschließlich Glasfasern enthält.

Der erfindungsgemäße Druckbehälter umfasst demgegenüber die erste und die zweite Armierung gemeinsam, die wie vorstehend angegeben ausgebildet und in einander umschließenden Schichten angeordnet sind. Insgesamt resultiert daraus ein Dehnungsverlauf des gebrauchsfertigen Druckbehälters entsprechend der Kurve 6 bis zur Druckstufe 12.

Bei einem weiter zunehmenden Druckanstieg im Inneren des Druckbehälters 20 über die Druckstufe 12 wird zuerst die zweite Armierung 23, die nur Kohlefasern enthält, wegen deren geringerer Bruchdehnung bei der Stufe 12 brechen. Der Bruch indiziert eine sprunghafte Dehnungsänderung 8 des Druckbehälters 20 mit noch intakter Armierung 22. Diese Dehnungsänderung 8 wird von dem Signalgeber 24 mechanisch oder elektrisch angezeigt, was es ermöglicht, den Druckbehälter 20 abzuschalten. Die weiterhin unbeschädigte, erste Armierung 22 ist während dessen allein in der Lage, die aus dem druckbeaufschlagten Medium in dem Druckbehälter 20 herrschenden Kräfte in sich aufzunehmen, ohne dass es zu einem Bersten des Druckbehälters 20 oder zu einer Leckage kommt. Demgemäss entsteht die Kurve 8, die die dabei entstehenden und gut erkennbaren Dehnungsänderungen des Druckbehälters 20 wiedergibt. Mit einem weiteren Druckanstieg kommt es aufgrund der nun fehlenden zweiten Armierung 23 zu einer im Verhältnis des Druckanstiegs stärkeren Dehnung 9 und schließlich beim Erreichen der Druckstufe 13 zu einem endgültigen Versagen bei dem zuvor berechneten Berstdruck.

Die Dimensionierung der ersten und der zweiten Armierung 23, 22 hängt maßgeblich vom Anwendungsfall ab.

Der Prüfdruck 11 liegt oberhalb des Betriebsdruckes 10 und wird im Allgemeinen mit dem Abnehmer eines solchen Druckbehälters bzw. mit den Zulassungsbehörden vereinbart.

Besonders kommt es auf die Indikationsstufe 12 im Sinne der Erfindung an: Sie zeigt ein kontrolliertes Brechen nur der zweiten Armierung bei einem noch höheren Druck als dem Prüfdruck 11 an und dient im Sinne der Erfindung als Indikator dafür, dass der Druckbehälter 20 eine Überlastung erfahren hat und rechtzeitig abzuschalten oder zu entleeren ist. Ein unkontrolliertes Bersten ohne Vorwarnung ist dadurch ausgeschlossen.

Noch darüber liegt der Berstdruck 13, bei dem der Druckbehälter 20 insgesamt zerstört wird. Der Wert kann in der Praxis bei der Benutzung des Druckbehälters im Sinne der Erfindung wegen des Abschaltmechanismusses nicht mehr erreicht werden. Er kann jedoch in Liefervereinbarungen festgehalten werden, um dem Abnehmer eine bestimmte Sicherheit in Hinblick auf die vorgesehenen Verwendungen zu geben. Es muss ein gewisser Abstand zwischen der Druckstufe 12 und der Druckstufe 13 vorhanden sein, damit es zu keiner funktionsbeeinträchtigenden Beschädigung der ersten Armierung 22 im Falle des kontrollierten Brechens der zweiten Armierung 23 kommt.

Diese Wirkung lässt sich grundsätzlich ebenfalls erzielen, wenn die Armierung in umgekehrter Reihenfolge der Schichten aufgebaut wird, dergestalt, dass die erste Armierung die zweite Armierung außenseitig umschließt. Diese Ausbildung hat den Vorteil, dass die verhältnismäßig spröde, zweite Armierung durch die nachgiebigere, erste Armierung vor eventuellen, mechanischen Beschädigungen zusätzlich geschützt wird. Der Nachweis von ev. Rissen in der zweiten Armierung kann dabei, wie oben beschrieben, visuell an Hand der sich auch dabei ergebenden Formveränderungen der ersten Armierung erfolgen oder mit Hilfe von sekundären Indikatoren, beipielsweise mit Hilfe vor Widerstandsmeßeinreichtungen, Dehnsteifen u.ä..

Die Vorteile der Erfindung bestehen vor allem darin, dass sich bei einem besonders sparsamen Materialverbrauch bei der Herstellung des Druckbehälters und einem demgemäss verminderten Gewicht ein unkontrolliertes Bersten völlig ausschließen und damit eine höhere Sicherheit als bisher erzielen lässt.

## Patentansprüche

1. Druckbehälter für ein druckbelastetes, fließfähiges oder gasförmiges Medium, umfassend eine erste Armierung (22) aus Fasern, die als Wicklung aufgebracht und in Kunstharz eingebettet sind, **dadurch gekennzeichnet, dass** zusätzlich zur ersten Armierung (22) eine zweite Armierung (23) vorgesehen ist, dass die zweite Armierung (23) eine Bruchdehnung hat, die kleiner ist als diejenige der ersten Armierung (22), dass die erste Armierung (22), für sich allein genommen, ausreicht, um die aus dem Druck des Mediums in dem Druckbehälter (20) resultierenden Kräfte insgesamt aufzunehmen dass es bei einer Überlastung zu einem Bruch der zweiten Armierung (23) kommt und dass der Bruch der zweiten Armierung (23) erkennbar angezeigt wird, ohne dass es zu einer Funktionsbeeinträchtigung der ersten Armierung (22) kommt.

2. Druckbehälter nach Anspruch 1, **dadurch gekennzeichnet, dass** die zweite Armierung (23) eine Bruchdehnung aufweist, die maximal 50 bis 90 % der Bruchdehnung der ersten Armierung (22) beträgt.

3. Druckbehälter nach Anspruch 1 oder 2, **dadurch gekennzeichnet, dass** die zweite Armierung (23) eine Steifigkeit aufweist, die mindestens 10 % höher ist als diejenige der ersten Armierung (22).

4. Druckbehälter nach einem der Ansprüche 1 bis 3, **dadurch gekennzeichnet, dass** die zweite Armierung (23) eine Bruchdehnung aufweist, die maximal 50 bis 70 % der Bruchdehnung der ersten Armierung (22) beträgt.

5. Druckbehälter nach einem der Ansprüche 1 bis 4, **dadurch gekennzeichnet, dass** die erste Armierung (22) aus einem gegebenenfalls tiefgezogenen und/oder verschweißten Metallblech besteht.

6. Druckbehälter nach einem der Ansprüche 1 bis 5, **dadurch gekennzeichnet, dass** beide Armierungen (22, 23) Fasern enthalten, die als Wicklung aufgebracht und in Kunstharz eingebettet sind.

7. Druckbehälter nach einem der Ansprüche 1 bis 6, **dadurch gekennzeichnet, dass** die beiden Armierungen (22, 23) schichtweise übereinanderliegend angeordnet sind.

8. Druckbehälter nach einem der Ansprüche 1 bis 6, **dadurch gekennzeichnet, dass** die erste Armierung (22) die zweite Armierung (23) außenseitig umschließt.

9. Druckbehälter nach einem der Ansprüche 1 bis 6, **dadurch gekennzeichnet, dass** die zweite Armierung (23) die erste Armierung (22) außenseitig umschließt.

10. Druckbehälter nach einem der Ansprüche 6 bis 9, **dadurch gekennzeichnet, dass** die zweite Armierung (23) eine Wandstärke hat, die 5 bis 50 % der Wandstärke der ersten Armierung (22) beträgt.

11. Druckbehälter nach einem der Ansprüche 6 bis 10, **dadurch gekennzeichnet, dass** die erste und die zweite Armierung (22, 23) dieselben Fasern enthalten und dass die in einem zylindrischen Bereich des Druckbehälters (20) angeordneten Fasern der ersten Armierung (22) mit der Achse des Druckbehälters (20) einen Winkel einschließen, der wenigstens 20° kleiner ist als derjenige der Fasern der zweiten Armierung (23) in dem zylindrischen Bereich.

12. Druckbehälter nach einem der Ansprüche 6 bis 11, **dadurch gekennzeichnet, dass** die erste und die zweite Armierung (22, 23) Fasern einer unterschiedlichen Bruchdehnung enthalten.

13. Druckbehälter nach einem der Ansprüche 1 bis 12, **dadurch gekennzeichnet, dass** die Mittel zur Sichtbarmachung einer sprunghaften Veränderung des Aussehens und/oder der Dehnung der Wandung des Druckbehälters geeignet sind.

14. Druckbehälter nach Anspruch 13, **dadurch gekennzeichnet, dass** die Mittel einen Signalgeber (24) zur Erfassung der Dehnung der Wandung des Druckbehälters umfassen.

15. Druckbehälter nach einem der Ansprüche 1 bis 14, **dadurch gekennzeichnet, dass** die zweite Armierung (23) eine Sollbruchstelle aufweist.

16. Duckbehälter nach einem der Ansprüche 12 bis 15, **dadurch gekennzeichnet, dass** der Signalgeber (24) zur Abgabe eines elektrischen oder mechanischen Steuersignals geeignet ist.

17. Druckbehälter nach Anspruch 16, **dadurch gekennzeichnet, dass** das Steuersignal zur Abschaltung des Druckbehälters (20) geeignet ist.

## Claims

1. Pressure vessel for a pressurised, free-flowing or gaseous medium, comprising a first reinforcement (22) made of fibres which are applied as a winding and embedded in synthetic resin, **characterised in that** in addition to the first reinforcement (22), a second reinforcement (23) is provided, **in that** the second reinforcement (23) has an elongation at break which is less than that of the first reinforcement (22), **in that** the first reinforcement (22) is sufficient on its own to absorb in total the forces resulting from the pressure of the medium in the pressure vessel (20), **in that** in the event of an overload, a fracture occurs in the second reinforcement (23) and **in that** the fracture of the second reinforcement (23) is recognisably displayed without a functional impairment of the first reinforcement (23) occurring.

2. Pressure vessel according to claim 1, **characterised in that** the second reinforcement has an elongation at break which is a maximum of 50 to 90% of the elongation at break of the first reinforcement (22).

3. Pressure vessel according to claim 1 or 2, **characterised in that** the second reinforcement (23) has a rigidity which is at least 10% higher than that of the first reinforcement (22).

4. Pressure vessel according to any one of claims 1 to 3, **characterised in that** the second reinforcement (23) has an elongation at break which is a maximum of 50 to 70% of the elongation at break of the first reinforcement (22).

5. Pressure vessel according to any one of claims 1 to 4, **characterised in that** the first reinforcement (22) consists of an optionally deep-drawn and/or welded metal sheet.

6. Pressure vessel according to any one of claims 1 to 5, **characterised in that** the two reinforcements (22, 23) contain fibres which are applied as a winding and are embedded in synthetic resin.

7. Pressure vessel according to any one of claims 1 to 6, **characterised in that** the two reinforcements (22, 23) are arranged one above the other in layers.

8. Pressure vessel according to any one of claims 1 to 6, **characterised in that** the first reinforcement (22) surrounds the second reinforcement (23) on the outside.

9. Pressure vessel according to any one of claims 1 to 6, **characterised in that** the second reinforcement (23) surrounds the first reinforcement (22) on the outside.

10. Pressure vessel according to any one of claims 6 to 9, **characterised in that** the second reinforcement (23) has a wall thickness which is 5 to 50% of tie wall thickness of the first reinforcement (22).

11. Pressure vessel according to any one of claims 6 to 10, **characterised in that** the first and the second reinforcement (22, 23) contain the same fibres and **in that** the fibres of the first reinforcement (22) arranged in a cylindrical region of the pressure vessel (20) enclose an angle with the axis of the pressure vessel (20), which is at least 20° smaller than that of the fibres of the second reinforcement (23) in the cylindrical region.

12. Pressure vessel according to any one of claims 6 to 11, **characterised in that** the first and the second reinforcement (22, 23) contain fibres with a different elongation at break.

13. Pressure vessel according to any one of claims 1 to 12, **characterised in that** the means are suitable for making visible an abrupt change in the appearance and/or the elongation of the wall of the pressure vessel.

14. Pressure vessel according to claim 13, **characterised in that** the means comprise a signal transmitter (24) for detecting the elongation of the wall of the pressure vessel.

15. Pressure vessel according to any one of claims 1 to 14, **characterised in that** the second reinforcement (23) has a predetermined breaking point.

16. Pressure vessel according to any one of claims 12 to 15, **characterised in that** the signal transmitter (24) is suitable for emitting an electrical or mechanical control signal.

17. Pressure vessel according to claim 16, **characterised in that** the control signal is suitable to switch off the pressure vessel (20).

## Revendications

1. Réservoir sous pression pour un fluide sous pression, coulant ou gazeux, comprenant une première armature (22) en fibres qui sont appliquées en tant qu'enroulement et encastrées dans de la résine synthétique, **caractérisé en ce qu'**en plus de la première armature (22), une seconde armature (23) est ménagée, **en ce que** la seconde armature (23) a une dilatation à la rupture qui est plus petite que celle de la première armature (22), **en ce que** la première armature (22), prise en soi, suffit à réceptionner en tout les forces résultant de la pression du fluide dans le réservoir sous pression (20), **en ce qu'**en cas d'une surcharge, il se produit une rupture de la seconde armature (23) et **en ce que** la rupture de la seconde armature (23) est indiquée de manière identifiable, sans qu'il n'y ait atteinte au fonctionnement de la première armature (22).

2. Réservoir sous pression selon la revendication 1, **caractérisé en ce que** la seconde armature (23) présente une dilatation à la rupture, qui est de maximum 50 à 90% de la dilatation à la rupture de la première armature (22).

3. Réservoir sous pression selon la revendication 1 ou 2, **caractérisé en ce que** la seconde armature (23) présente une rigidité qui est au moins 10% supérieure à celle de la première armature (22).

4. Réservoir sous pression selon l'une quelconque des revendications 1 à 3, **caractérisé en ce que** la seconde armature (23) présente une dilatation à la rupture, qui est de maximum 50 à 70% de la dilatation à la rupture de la première armature (22).

5. Réservoir sous pression selon l'une quelconque des revendications 1 à 4, **caractérisé en ce que** la première armature (22) est constituée d'une tôle de métal éventuellement emboutie et/ou soudée.

6. Réservoir sous pression selon l'une quelconque des revendications 1 à 5, **caractérisé en ce que** les deux armatures (22, 23) contiennent des fibres qui sont appliquées en tant qu'enroulement et encastrées dans de la résine synthétique.

7. Réservoir sous pression selon l'une quelconque des revendications 1 à 6, **caractérisé en ce que** les deux armatures (22, 23) sont disposées en étant superposées en couches.

8. Réservoir sous pression selon l'une quelconque des revendications 1 à 6, **caractérisé en ce que** la première armature (22) entoure la seconde armature (23) sur le côté extérieur.

9. Réservoir sous pression selon l'une quelconque des revendications 1 à 6, **caractérisé en ce que** la seconde armature (23) entoure la première armature (22) sur le côté extérieur.

10. Réservoir sous pression selon l'une quelconque des revendications 6 à 9, **caractérisé en ce que** la seconde armature (23) a une épaisseur de paroi qui est de 5 à 50% de l'épaisseur de paroi de la première armature (22).

11. Réservoir sous pression selon l'une quelconque des revendications 6 à 10, **caractérisé en ce que** la première et la seconde armatures (22, 23) contiennent les mêmes fibres et **en ce que** les fibres de la première armature (22), disposées dans une zone cylindrique du réservoir sous pression (20), comprennent, avec l'axe du réservoir sous pression (20), un angle qui est au moins 20° plus petit que celui des fibres de la seconde armature (23) dans la zone cylindrique.

12. Réservoir sous pression selon l'une quelconque des revendications 6 à 11, **caractérisé en ce que** la première et la seconde armatures (22, 23) contiennent des fibres d'une dilatation à la rupture différente.

13. Réservoir sous pression selon l'une quelconque des revendications 1 à 12, **caractérisé en ce que** les moyens sont aptes à rendre visible une modification rapide de l'aspect et/ou de la dilatation de la paroi du réservoir sous pression.

14. Réservoir sous pression selon la revendication 13, **caractérisé en ce que** les moyens comprennent un générateur de signaux (24) pour détecter la dilatation de la paroi du réservoir sous pression.

15. Réservoir sous pression selon l'une quelconque des revendications 1 à 14, **caractérisé en ce que** la seconde armature (23) présente une section destinée à la rupture.

16. Réservoir sous pression selon l'une quelconque des revendications 12 à 15, **caractérisé en ce que** le générateur de signaux (24) est apte à sortir un signal de commande électrique ou mécanique.

17. Réservoir sous pression selon la revendication 16, **caractérisé en ce que** le signal de commande est apte à déconnecter le réservoir sous pression (20).
